# EUROPEAN PATENT SPECIFICATION

(11) **EP 3 378 584 B1**
(45) Date of publication and mention of the grant of the patent: **27.10.2021**
(21) Application number: 17162785.4
(22) Date of filing: 24.03.2017
(51) Int. Cl.: B33Y 10/00, B33Y 30/00, B29C 64/153, B29C 64/171, B29C 64/277, B29C 64/364, B22F 10/28, B22F 12/70, B22F 10/322, B22F 12/45, B22F 12/00, B22F 10/77

(54) **DEVICE AND METHOD FOR PRODUCING A THREE-DIMENSIONAL WORKPIECE**
VORRICHTUNG UND VERFAHREN ZUR HERSTELLUNG EINES DREIDIMENSIONALEN WERKSTÜCKS
DISPOSITIF ET PROCÉDÉ DE PRODUCTION D'UNE PIÈCE À USINER TRIDIMENSIONNELLE

(43) Date of publication of application: 26.09.2018
(73) Proprietor: SLM Solutions Group AG, 23560 Lübeck (DE)
(72) Inventor: KROL, Toni Adam, 23560 Lübeck (DE); SCHÖNEBORN, Henner, 23560 Lübeck (DE); SCHWARZE, Dieter Josef, 23560 Lübeck (DE); HÜBINGER, Karsten, 23560 Lübeck (DE)
(74) Representative: Schicker, Silvia

(56) References cited:
- EP-A1- 2 862 651
- EP-A1- 3 056 301
- WO-A1-2015/189619
- DE-A1-102004 031 881
- DE-A1-102013 215 377
- DE-A1-102014 212 100
- DE-A1-102015 010 387
- US-A1- 2016 121 398

## Description

The present invention relates to a method and an apparatus for producing a three-dimensional workpiece. More specifically, the invention relates to setting a desired gas flow across a build area in which a raw material powder layer is provided, said raw material powder layer being selectively irradiated by means of a irradiation system.

Selective laser melting or laser sintering is an additive layering process by which pulverulent, in particular metallic and/or ceramic raw materials, can be processed to three-dimensional workpieces of complex shapes. To that end, a raw material powder layer is applied onto a carrier defining a build area and subjected to laser radiation in a site selective manner in dependence on the desired geometry of the workpiece that is to be produced. The laser radiation penetrating into the powder layer causes heating and consequently melting or sintering of the raw material powder particles. Further raw material powder layers are then applied successively to the layer on the carrier that has already been subjected to laser treatment, until the workpiece has the desired shape and size. Selective laser melting or laser sintering can be used in particular for the production of prototypes, tools, replacement parts or medical prostheses, such as, for example, dental or orthopaedic prostheses, on the basis of CAD data.

It is further known to provide inert or protective gas to avoid unwanted chemical reactions of the irradiated material e.g. with surrounding oxygen. For example, an apparatus for producing moulded bodies from pulverulent raw materials by selective laser melting is described in EP 1 793 979 A1. The prior art apparatus comprises a process chamber which accommodates a plurality of carriers for the shaped bodies to be manufactured. A powder layer preparation system comprises a powder reservoir holder that can be moved to and fro across the carriers in order to apply a raw material powder to be irradiated with a laser beam onto the carriers. The process chamber is connected to a protective gas circuit comprising a supply line via which a protective gas may be supplied to the process chamber in order to establish a protective gas atmosphere within the process chamber. The protective gas circuit further comprises a discharge line via which protective gas containing particulate impurities such as, for example, residual raw material may leave the process chamber.

Moreover, it is known to produce a desired gas flow pattern, so that the raw material powder layer is reliably covered with gas. In this context, EP 2 862 651 A1 discloses a respective solution in which gas is guided across a build area that is subdivided into several irradiation areas. This solution is, however, directed to specific layouts of irradiation areas and may thus not be applicable in certain production scenarios.

WO 2015/189619 A1 discloses an additive manufacturing apparatus comprising a build chamber in which an object is built and a flow device. The flow device comprises a body having a Coanda surface and a passageway connectable to a pressurised gas source. The passageway has an opening located adjacent to the Coanda surface to, in use, direct a jet of gas over the Coand surface. A space adjacent the Coanda surface is in fluid communication with the build chamber such that gas drawn into and/or propelled from the space causes gas flow through the build chamber.

DE 10 2015 010387 A1 discloses an apparatus for the additive production of large three-dimensional structures by micro-laser deposition melting of metallic powder layers deposited on a lifting table provided with a build platform and arranged in a powder chamber, with several laser units. The apparatus comprises a gas supply unit arranged in the middle and above the build platform in a space between two adjacent laser working areas with both sides outwardly facing gas outlet openings for generating two oppositely directed gas flows in cooperation with the mutual gas outlet openings each opposite suction hoods of a suction device.

EP 3 056 301 A1 discloses an additively manufactured assembly including an additively manufactured component with an edge oriented with respect to a recoater blade direction and a non-contact support that does not form a part of the additively manufactured component. The additively manufactured support is located adjacent the edge. A method of additively manufacturing a component includes additively manufacturing a component with an edge oriented with respect to a recoater blade direction simultaneous with additively manufacturing an non-contact support that does not form a part of the component, the additively manufactured support located adjacent the edge.

The invention is directed at the object of providing a method and an apparatus which allow the production of a high-quality three-dimensional workpiece and which are marked by an increased application range.

This object is addressed by a device as defined in claim 1 and a method as defined in claim 14.

Accordingly, a device and a method for producing a three-dimensional workpiece by carrying out an additive layering process is provided. In general, of the introductory remarks relating to the general background of the present technical field may also apply to the present invention. Specifically, the device as well as the method of the present invention may be configured to carry out a cyclic additive layering process in which layers of raw material powder layer are deployed, selectively irradiated and thus solidified, to then deploy a subsequent raw material powder layer on top of the just solidified one. Thereby, a workpiece can be built up from the raw material powder in a layer-by-layer manner. Also, in the context of the present invention, any teaching referring to a single raw material powder layer may also include that this teaching is applicable to all, to at least 50% or to at least 20% of the total number of raw material powder layers used for building up a given workpiece.

According to the present invention, defined by the appended claims, the device comprises a build area that is configured to receive a raw material powder layer. The build area may be defined as or by a carrier of the device. Specifically, the build area may relate to an area of the device in which the workpiece can be produced from the raw material powder. The build area may generally define a maximum footprint or cross-section of said workpiece. Moreover, the device may comprise a process chamber in which said build area (as well as any of the further components of the device discussed in the following) may be arranged.

The raw material powder preferably is a metallic powder, in particular a metal alloy powder, but may also be a ceramic powder or a powder containing different materials. The powder may have any suitable particle size or particle size distribution. It is, however, preferable to process powders of particle sizes < 100 µm. The process chamber may be sealable against the ambient atmosphere, i.e. against the environment surrounding the process chamber, in order to be able to maintain a controlled atmosphere, in particular an inert atmosphere within the process chamber. By controlling the atmosphere within the process chamber, the occurrence of undesired chemical reactions, in particular oxidation reactions, upon irradiating the raw material powder with electromagnetic or particle radiation can be prevented.

The optional carrier may be disposed in the process chamber and/or may be a rigidly fixed carrier. Preferably, however, the carrier is designed to be displaceable in vertical direction so that, with increasing construction height of a workpiece, as it is built up in layers from the raw material powder, the carrier can be moved downwards in the vertical direction. A plurality of irradiation areas may be defined on a surface of the carrier or, to put it differently, within an irradiation plane extending in parallel to said carrier and/or the build area. Said irradiation plane, preferably, includes a raw material powder layer that is to be irradiated next. For example, at least four irradiation areas may be provided that are arranged in a grid or matrix pattern.

The device further comprises a powder application device that is configured to deploy the raw material powder onto the build area. The powder application device may be configured according to known solutions and, for example, may be movable across the build area to deploy a sequence of raw material powder layers on top of one another.

The device further comprises an irradiation system that is configured to selectively irradiate the raw material powder layer on the build area. In particular, the raw material powder applied onto the carrier may be subjected to electromagnetic or particle radiation in a site-selective manner in dependence on the desired geometry of the workpiece that is to be produced. For doing so, the irradiation system preferably is adapted to irradiate radiation (e.g. laser radiation) onto the raw material powder which causes a site-selective melting of the raw material powder particles.

The irradiation system may comprise a plurality of irradiation units. As further detail below, each irradiation unit may be assigned to an individual irradiation area defined on the surface of the carrier or, to put it differently, defined within an irradiation plane extending in parallel to the carrier. Each irradiation unit may further be configured to selectively irradiate electromagnetic or particle radiation onto the raw material powder applied onto its assigned irradiation area.

In general, each irradiation unit may comprise a radiation beam source, in particular a laser beam source. It is, however, also conceivable that plural irradiation units are associated with a single radiation beam source, wherein a radiation beam provided by the single radiation beam source, by suitable means such as, for example, beam splitters and/or mirrors, may be split and/or deflected as required so as to direct the radiation beam provided by the radiation beam source to the associated irradiation units. Further, each irradiation unit may comprise at least one optical unit for guiding and/or processing a radiation beam emitted by the radiation beam source and supplied to the irradiation unit. The optical unit may comprise optical elements such an object lens, in particular an f-theta lens, and/or a scanner unit, the scanner unit preferably comprising a diffractive optical element and a deflection mirror.

Each irradiation unit may be controlled such that the radiation beam emitted by the radiation beam source is irradiated onto the raw material powder applied onto the irradiation area associated with the irradiation unit in a site selective manner and independent of the irradiation of other irradiation areas not associated with the irradiation unit in question. In other words, each irradiation area defined on the carrier may be individually and independently irradiated using a desired irradiation pattern. For example, if desired, a small sized three-dimensional workpiece may be built-up in a single irradiation area by selectively irradiating the single irradiation area with electromagnetic or particle radiation by means of the irradiation unit associated with the irradiation area. Preferably, however, plural irradiation areas defined on the carrier are simultaneously irradiated with electromagnetic or particle radiation by suitable controlling the irradiation units associated with the irradiation areas thus allowing a large three-dimensional workpiece to be built-up in an additive layer construction process within a relatively short time and thus at reasonable costs.

The invention further contemplates arranging a plurality of irradiation units (e.g. at least four, at least eight or at least sixteen irradiation units) of the irradiation system according to a predetermined pattern. This may relate to, for example, a grid- or matrix-pattern. In general, the irradiation system and in particular any irradiation units comprised thereby may be arranged oppositely to the build area. For example, the irradiation system and/or the irradiation units may be arranged above and so as to face the build area. This may be achieved by arranging the irradiation system at or in parallel to an upper ceiling portion of the process chamber.

The device may further be configured to provide at least one gas flow that is directed along an axis extending from a first edge region of the build area towards a second edge region of the build area. The first and second edge region is different from one another and, in particular, may be oppositely arranged to one another. In one example, the build area has a substantially rectangular shape. In this case, the first and second edge regions may include different sides of said rectangular shape and, in particular, opposite sides thereof. The gas flow is provided in and/or supplied to a process chamber of the device, said process chamber being configured according to one of the above examples and containing e.g. the build area.

In general, the gas flow may be provided by means of a gas supply arrangement of the device. Said gas supply arrangement may, similar to known examples, generally be configured to produce or provide a gas flow across the build area. Additionally or alternatively, at least part of said gas flow is provided by a gas flow guide element discussed below. Specifically, in case of the device comprising two gas flow guide elements being arranged adjacent to one another, the gas flow may be provided by one of the gas flow guide elements and flow towards the other.

The gas flow may comprise an inert gas such as, for example, Argon, Nitrogen or the like. It is, however, also conceivable that the gas flow comprises air. The gas may be supplied by means of a suitable conveying device such as, for example, a pump or a blower. The device, and in particular an optional gas supply arrangement thereof, may comprise or be connectable to known gas circuit configurations, comprising further elements, such as filters, pumps, cooling equipment and the like.

In general, the gas flow is provided so as to flow across the build area and, in particular, along a surface of a raw material powder deposited thereon. For providing the desired gas flow, at least one gas inlet may be provided, that is preferably arranged close to the first edge region. Said gas inlet may be connected to a pump or blower for creating a pressure required for making the gas stream along the build area. Additionally or alternatively, at least one gas outlet may be provided for removing gas from the build area, said gas outlet being preferably arranged close to the second edge region.

In general, gas that is supplied to the build area may be described as "fresh gas" when it has not yet been guided across or along said build area. When flowing across the build area, particulate impurities may accumulate in the gas. In such a state, the gas may generally be referred to as "used gas". The device is configured to at least partially remove said used gas from the build area. This may be carried out by means of the above-mentioned gas outlet. Said gas outlet may be connected to a pump or a blower to create a suction force for removing the gas from the build area. Note that any of the gas inlet or gas outlet may be comprised by the optional gas supply arrangement of the device.

In summary, while the raw material powder applied onto the carrier is selectively irradiated with electromagnetic or particle radiation, the fresh gas supplied to the build area by means of e.g. the gas supply arrangement, upon flowing along the build area, is increasingly loaded with particulate impurities such as, for example, raw material powder particles or welding smoke particles. The gas may be removed from the build area via an optional gas outlet in a state resembling used gas due to containing particulate impurities. Additionally or alternatively, the gas may interact with a gas flow guide element discussed below so as to be at least partially diverted away from the build area. Hence, particulate impurities generated in the process chamber upon irradiating the raw material powder on the carrier with electromagnetic or particle radiation are purged from the build area by the gas flow. By removing particulate impurities from the build area, excessive absorption of radiation energy and/or shielding of the radiation beams emitted by the irradiation system may be avoided. Also, contamination of areas of the build area which have not yet been irradiated can be avoided. Specifically, contamination of such areas by an undesired deposition of particles or splatters can be avoided.

The device of the invention is generally configured to further improve the supply of fresh gas to the build area and thereby improve the quality of the overall production process. Specifically, the device further comprises a gas flow guide element that is configured to divert at least part of the gas flow away from the build area before said gas flow reaches the second edge region, wherein the gas flow guide element comprises a gas supply portion that is configured to supply a fresh gas flow along (at least part of) the build area.

The gas flow guide element may thus be configured to remove and discharge at least part of the gas flow on its way across the build area. This way, at least a certain share of said gas flow that may have picked up impurities on its way across the build area towards the gas flow guide element (i.e., a certain volume of used gas) is prevented from further flowing along the build area.

The gas flow guide element may, in particular in parallel to diverting gas away from the build area, also supply a fresh gas flow from its gas supply portion to the build area. The volume of supplied fresh gas may be controlled in accordance with a volume of used gas that is diverted away from the build area. Specifically, the volumes of supplied fresh gas and the volume of diverted used gas may be proportionate and/or may be at least approximately equivalent to one another.

For diverting the gas away from the build area, the gas flow guide element comprises a gas diversion portion, e.g. a gas diversion nozzle. The gas may enter said portion in order to be diverted away from the build area. The gas flow guide element may further comprise or be connectable to a gas circuit. For example, the gas flow guide element may be configured to divert the gas flow so as to enter or re-enter such a gas circuit, e.g. in order to be guided towards a filter or other cleaning units, so as to remove the particulate impurities therefrom.

The gas supply portion of the gas flow guide element may likewise comprise or be connected to a gas circuit which may be the same gas circuit to the gas supply portion is connected. Likewise, the optional gas supply arrangement and the gas flow guide element (or at least its gas supply portion) may comprise or be connected to one and the same gas circuit, wherein said gas circuit may be comprised by the overall device. The gas supply portion may comprise an opening or a nozzle to direct the fresh gas towards the build area. Specifically, the gas supply portion may be configured to supply the fresh gas in an at least partially tangential manner to a surface of the build area, i.e. the fresh gas being supplied to the build area by the gas supply portion so as to flow along said build area.

The gas supply element may comprise a main portion housing at least part of the gas supply portion as well as at least part of a gas diversion portion. The main portion may comprise two channel portions, one channel portion allowing a gas flow towards the gas supply portion and another channel portion allowing a gas flow away from the gas diversion portion (and from the build area). These channel portions may be separated by a common wall portion (or, differently put, by a central wall) of the gas supply element.

The gas supply element (and in particular its main portion) may span across the build area. For example, the gas supply element may extend between different edge portions of the build area and, preferably, between opposite edge portions thereof. These edge portions may be different from the first and second edge portions between which the axis extends along which the gas flow is provided. To put it differently, the gas supply element may extend within a plane that is non-parallel to the build area and/or non-parallel to the at least one gas flow. Specifically, said plane may extend orthogonally to the build area and/or to the gas flow.

Overall, the invention thus contemplates deliberately interrupting a gas flow across the build area between the first and second edge region and at least partially replacing it with a fresh gas flow, wherein said interruption and replacement may take place after a predetermined interval or in predetermined stages. Thus, while flowing across the area, the gas flow may be periodically refreshed or even fully replaced by providing new volumes of fresh gas, especially when a plurality of gas flow guide elements is provided.

Generally, the gas supply portion and the gas diversion portion may be arranged at different sides of the gas flow guide element. For example, they may be arranged at sides of the gas flow guide element facing away from one another or, in general, may be arranged so as to face away from one another. In one example, the gas supply portion may be arranged at a side of the gas flow guide element facing the second edge region, whereas the gas diversion portion may be arranged at a side of the gas flow guide element facing the first edge region. A relative position between the gas supply portion and gas diversion portion may be constant. For example, both of these portions may assume fixed positions within gas flow guide element and/or may not be movable relative to one another.

In general, a width of the gas flow guide element when viewed along the gas flow axis may be less than 20 cm, less than 10 cm, less than 5 cm or less than 2 cm. This may relate at least to a portion of the gas flow guide element close to the build area and/or to a portion including at least one of the gas supply portion and gas diversion portion.

According to a further embodiment, the fresh gas flow provided by the gas flow guide element is directed in the same direction as the gas flow before it is partially diverted away from the build area, i.e. the direction of said gas flow while streaming along the build area. The gas flow flows along the axis in a specific direction, e.g. from the first edge region towards the second edge region. The fresh gas flow provided by the gas flow guide element is provided, so as to substantially flow along said same axis and in the same direction along said axis.

In summary, at least part of the gas flow provided by the device may be diverted away from the build area when reaching the gas flow guide element. The gas flow is then continued with the fresh gas supplied by the gas flow guide element, said fresh gas flow extending in the same direction as the gas flow that has been partially diverted. In other words, the gas flow guide element is at least partially interrupt the gas flow in between the first edge region and the second edge region and replace part of said gas flow with its own fresh gas flow. In this context, the gas flow is provided by a gas inlet of a gas supply arrangement to flow towards a gas outlet of the gas supply arrangement, thereby being directed across the build area.

As further detailed below, it is, however, also conceivable that a plurality of gas flow guide elements is provided adjacent to one another. In this connection, a first gas flow guide element may be supplied with a gas flow provided by an adjacent second gas flow guide element. To put it differently, a gas flow comprising or being formed by the fresh gas flow provided by said adjacent second gas flow guide element may reach the first gas flow guide element after flowing along the axis extending between the first and second edge region. In this case, the first gas flow guide element may be configured to divert at least part of said gas flow away from the build area and/or to replace it with its own fresh gas flow which is preferably directed in the same direction.

In general, at least a gas diversion portion and/or the gas supply portion of the gas supply element flow guide element may be arranged above and/or opposite to the build area. According to a further example, the gas flow guide element is located between the first and second edge region of the build area and, preferably, a distance between the gas flow guide element and a central portion of the build area is the same or smaller than a distance between the gas flow guide element and at least one of the first and second edge regions. In other words, the gas flow guide element may be located closer to a central portion of the build area than to at least one of the first and second edge regions.

The gas flow guide element may be located at a position along the axis extending between the first and second edge region, wherein said position is located between the first and second edge region. The gas flow guide element may generally be arranged in or opposite to a central region of the build area, said central region e.g. comprising or being defined by a geometric centre of said build area. On the other hand, the gas flow guide element may be arranged outside of the central region. Yet, a distance to said central region may be the same or less than a distance to one or both of the first and second edge regions. In case of a plurality of gas flow guide elements, these may be arranged so that a distance to a directly adjacent gas flow guide element is the same or less then to at least one of the first and second edge regions. Note that any of the above-discussed distances may be measured along the gas flow axis extending between the first and second edge regions. In summary, by arranging the gas flow guide element(s) according to one of the above examples, it may be achieved that a timely refreshment of the gas flow takes place by means of the fresh gas flow provided by the gas flow guide element.

In one embodiment, the irradiation system comprises at least two irradiation units that are each assigned to an individual irradiation area of the build area to selectively irradiate a portion of the raw material powder layer extending into said irradiation area; and wherein the gas flow guide element is located in between said irradiation areas or wherein the gas flow guide element is located close or opposite to a region wherein said irradiation areas overlap.

The irradiation areas may define a certain part or share of the irradiation plane and/or the overall area that is to be irradiated. Specifically, the irradiation areas may comprise part of an irradiation plane extending in parallel to the carrier and, preferably, containing a raw material powder layer that is next to be irradiated. The irradiation areas as well as the irradiation plane may be virtual elements and, for example, may be defined by setting the scanning ranges of the irradiation system appropriately. The irradiation areas may be assigned individually to only one of the irradiation units, so that the respective irradiation unit is configured to irradiate any raw material powder extending into said irradiation area. The irradiation areas may also partially overlap each other, for example at adjacent edge regions thereof.

Accordingly, the gas flow guide element may be located in between the irradiation areas preferably in such a manner, that a gas flow that has passed a first one of the irradiation areas is at least partially or substantially completely diverted away from the build area by means of said gas flow guide element. Consequently, a gas flow for flowing along the further second irradiation area may be at least partially or substantially completely provided by means of the fresh gas flow provided by the gas flow guide element. The same may be achieved when arranging the gas flow guide element close opposite to an overlap region between the irradiation areas. In general and as further detailed below, the gas flow guide element may be configured (e.g. the designed or dimensioned) so as to not block any of the radiation from the irradiation units when travelling towards the irradiation areas.

The irradiation areas may be arranged, with an optional partial overlap, one behind the other along the gas flow axis extending from the first edge region towards the second edge region. Accordingly, the irradiation areas may each comprise at least one portion that extends along a specific section of the gas flow axis, wherein said sections are different from one another. Said a portion may comprise a central portion of the irradiation areas. To put it differently, the geometric centres of the irradiation areas may be arranged one behind the other along said gas flow axis.

The irradiation system may also comprise at least one further irradiation unit, assigned to an irradiation area that is defined so that the plurality of irradiation areas is arranged one behind the other along said gas flow axis, with an optional partial overlap between adjacent irradiation areas; and wherein for each group of two adjacent irradiation areas, at least one gas flow guide element is provided that is located between said two adjacent irradiation areas or wherein said gas flow guide element is located close or opposite to a region wherein said two adjacent irradiation areas overlap. Accordingly, a sequence of irradiation areas may be defined along the gas flow axis, such that at least one irradiation area may be enclosed by two outermost irradiation areas (i.e., at least one further irradiation area being arranged between a first and last irradiation area along said axis). Thus, a plurality of groups of adjacent irradiation areas is formed. In this context, the outermost irradiation areas may have only one adjacent irradiation area, wherein the enclosed or remaining irradiation areas may have two adjacent irradiation areas (i.e., one on each side). Accordingly, the outermost irradiation areas may belong to only one group of two adjacent irradiation areas, whereas the enclosed irradiation areas may be assigned to different two groups.

As an example, a first, a second and a third irradiation area may be arranged one behind the other along the gas flow axis. The first and third irradiation area thus form outermost irradiation areas which enclose the second irradiation area. The first irradiation area may be adjacent to the second irradiation area, whereas the second irradiation area may further be adjacent to the third irradiation area. Thus, a first group of two adjacent irradiation areas may be formed by the first and second irradiation areas and a second respective may be formed by the second and third irradiation areas, the second irradiation area thus being assigned to two respective groups of two adjacent irradiation areas.

The irradiation units and associated irradiation areas may generally form a subgroup of a pattern according to which said units and/or areas are arranged. For example, they may form at least part of a row or a column of a grid or matrix pattern, such as a four-by-four or two-by-three grid pattern according to which the irradiation units are arranged within the irradiation system and/or according to which the irradiation areas are arranged with respect to the build area. The gas flow guide element may be configured to extend between two adjacent rows or columns of such a grid or matrix pattern. Accordingly, the gas flow guide element may, by partially diverting it away from the build area, prevent at least part of a gas flow from passing from one row or column of said grid or matrix pattern to an adjacent row or column. Additionally or alternatively, the gas flow guide element may be configured to provide a fresh gas flow to said adjacent row or column.

In general, at least n-2 and preferably n-1 gas flow guide elements may be provided, wherein n denotes the total number of rows or columns of a respective grid or matrix pattern. The gas flow guide elements may then be distributed across said pattern, so that between each adjacent rows or columns, at least one gas flow guide element is provided. Overall, this means that each irradiation area assigned to an individual one of said irradiation units can be provided with an at least partially fresh gas flow. To put it differently, each irradiation area may be provided with a gas flow that has at least partially been refreshed and/or has not passed over more than one irradiation area prior to being at least partially refreshed. Again, refreshing the gas flow may take place by means of the fresh gas flow supplied by one of the gas flow guide elements.

According to a further example, the gas flow guide element extends from a region opposite the build area towards said build area. In this context, a distance between the gas flow guide element and the build area may be less than 10 cm, e.g. less than 5 cm, or less than 1 cm. Said distance may relate to a vertical distance or, in other words, a distance measured along an axis extending orthogonally to the build area. Accordingly, a predetermined gap may be formed between the build area and the gas flow guide element. A portion of the gas flow that is not diverted away from the build area by means of the gas flow guide element may pass through said gap. Alternatively, the gas flow guide element may also be arranged relative to the build area so that no substantial gap is formed therebetween (e.g be in contact with an uppermost raw material powder layer).

The gas flow guide element may be configured (e.g. designed, arranged and/or dimensioned) to extend outside an irradiation beam path between the irradiation system and the build area. In other words, the gas flow guide element may be configured so as to not block an irradiation emitted by the irradiation system from reaching the build area. For example, the irradiation system (or each of its irradiation units) may be configured to emit irradiation towards the build area under varying emission angles, e.g. by means of a suitable scanner unit. This way, an irradiation space through which the irradiation can travel between the irradiation system and the build area may be defined. The irradiation space may have a conical shape or a generally widening cross-section when viewed from the irradiation system towards the build area. In this context, the gas flow guide element may be configured so as to not extend into said irradiation space. In case of a plurality of irradiation units, the gas flow guide element may be arranged and/or shaped so as to extend in between adjacent irradiation spaces and, preferably, be positioned as close as possible to the build area without, however, extending within any of said irradiation spaces.

According to a further embodiment, the gas flow guide element is configured to collect particles that are carried by the diverted gas flow into the gas flow guide element. The particles may relate to particulate impurities within the gas flow and/or to single raw material powder particles being contained therein. Collection of such particles may be achieved by the gas flow guide element comprising a suitable filter element. Additionally or alternatively, a baffle plate or another suitable structure may be provided along or through which the diverted gas flow is guided, while at least part of the particles are separated from the gas flow. This way, the amount of particles that are carried further downstream into a gas circuit connected to the gas flow guide element can be limited. Specifically, the collection of particles may be done in such a manner, that an accumulation of particles close to and/or below of the gas flow guide element is avoided. This can be achieved by selecting a sufficiently strong gas flow which ensures that the particles actually enter the gas flow guide element and/or are transported further downstream into the gas circuit. Also, a collection member for collecting the particles, such as the above-mentioned filter or the baffle plate, may be arranged so as to reliably allow the particles to enter the gas flow guide element (i.e., not accumulating in front of it). Afterwards, however, the collection member may be configured to reliably keep said particles within the gas flow guide element and/or to promote that these particles are transported further downstream into the gas circuit.

In a further example, the gas flow guide element comprises at least one opening, preferably a plurality of openings and in particular a perforated or porous portion, that allows one the following:
- at least part of the gas flow to pass into the gas flow guide element at positions remote from a gas diversion portion close to the build area, said gas diversion portion containing an opening to receive part of the gas flow for diverting it away from the build area; or
- at least part of the fresh gas flow to pass out of the gas flow guide element at positions remote from the gas supply portion, said gas supply portion being preferably arranged close to the build area.

For example, the opening(s) and/or the perforated or porous portion may be provided alternatively or in addition to a gap being formed between the gas flow guide element and the build area and generally allow a predetermined portion of the gas flow to bypass said gap and/or said gas diversion portion. According to an additional or alternative configuration, at least one opening and/or a perforated or porous portion may be provided that allows part of the fresh gas stream to bypass the gas supply portion. The opening(s) and/or the perforated or porous portion may be located further away from the build area than the gas supply portion and/or gas diversion portion of the gas flow guide element. In one example, the gas supply portion and/or gas diversion portion are arranged at an underside portion of the gas flow guide element facing the build area. The opening(s) and/or the perforated or porous portion, on the other hand, may not be included in said underside portion (e.g. being vertically spaced apart therefrom or adjacent thereto). The perforated or porous portion may include numerous openings, preferably in form of a grid pattern. These may be formed in outer sidewalls of the gas flow guide element and/or may be smaller than openings of the gas supply portion or gas diversion portion. Moreover, the opening(s) and/or the perforated or porous portion may provide a fluidic connection to a central wall of the gas flow guide element. For example, a share of the gas flow entering the gas flow guide element through the perforated portion may hit said central wall and, preferably, be diverted thereby in a predetermined manner. Similarly, a share of the fresh gas flow flowing along said central wall may leave the gas flow guide element through the opening(s) and/or the perforated or porous portion prior to reaching the gas supply portion.

The gas flow guide element and the build area may be movable relative to each other according to at least one of the following:
- the gas flow guide element being movable relative to the build area in parallel to the build area;
- the gas flow guide element being movable relative to the build area between a position opposite to the build area and a position remote from the build area;
- the gas flow guide element being movable relative to the build area along an axis extending at an angle to the build area;
- the build area being movable relative to the gas flow guide element in parallel to the gas flow guide element;
- the build area being movable relative to the gas flow guide element between a position opposite to the gas flow guide element and a position remote from the gas flow guide element; and
- the build area being movable relative to the gas flow guide element along an axis extending at an angle to the build area.

Accordingly, the gas flow guide element may be movable relative to the build area along at least one axis extending in parallel to the build area, e.g. along an axis extending in parallel to a standard X- and Y-axis of the build area. Additionally or alternatively, the build area may be movable relative to the gas flow guide element in parallel to the gas flow guide element along at least one axis extending in parallel to the build area, e.g. along an axis extending in parallel to a standard X- and Y-axis of the build area.

Additionally or alternatively, the gas flow guide element may be movable towards and away from the build area, e.g. by selectively varying a distance thereto. This may be achieved by moving the gas flow guide element along an axis extending at an angle to the build area, wherein said axis extends preferably orthogonally to the build area. Any of these movements may be used to selectively move the gas flow guide element to a position opposite to the build area or remote therefrom. Additionally or alternatively, the build area may be movable towards and away from the gas flow guide element, e.g. by selectively varying a distance thereto. This may be achieved by moving the build area along an axis extending at an angle to the build area, wherein said axis extends preferably orthogonally to the build area. Any of these movements may be used to selectively move the build area to a position opposite to the gas flow guide element or remote therefrom.

In case the build area is movable relative to the gas flow guide element which in turn remains stationary, a constant gas flow can be maintained. The optical unit of the device may be movable relative to the gas flow guide element together with the build area. It is, however, also conceivable that the optic unit remains stationary when the build area is moved relative to the relative to the gas flow guide element.

In this context, the gas flow guide element may be movable relative to the build area in accordance with an operation of the powder application device. This way, it may be avoided that the gas flow guide element forms an obstacle for the powder application device, e.g. when said powder application device is an active state of deploying a raw material powder layer. Typically, the powder application device will move across the build area when deploying a raw material powder layer, such that the gas flow guide element may be selectively lifted away from the build area or generally be moved away therefrom so as to not interfere with said movement of the powder application device. In one example, the gas flow guide element is movable relative to the build area before and/or after the powder application device deploys a further layer of raw material powder onto the build area.

The device may also be configured to move the gas flow guide element relative to the build area and/or to move the build area relative to the gas flow guide element before the irradiation system has completed irradiating the raw material powder layer. Accordingly, irradiation of a raw material powder layer and a movement of the gas flow guide element and/or the build area may at least partially take place in parallel and/or in an interlaced manner. For example, the gas flow guide element and the build area may be kept as long as possible in a preferred position relative to each other and only selectively be moved away therefrom, e.g. so as to allow an irradiation of a region of the build area opposite to said preferred position. This may be particularly relevant when otherwise blocking a region of the build area from being irradiated. Accordingly, the gas flow guide element and/or the build area may be selectively moved between different locations, so that a region that was previously blocked by said gas flow guide element can be irradiated. This region may in particular contain an overlap area between adjacent irradiation areas as previously discussed. In summary, when irradiating a raw material powder layer, the gas flow guide element and the build area may change their position relative to each other prior to said irradiation having been completed. In particular, the gas flow guide element and/or the build area may be selectively moved back and forth between positions wherein the gas flow guide element is arranged opposite to or facing an overlap area between adjacent irradiation areas and positions remote from said overlap area, so that this overlap area can reliably be irradiated. These movements may be comparatively small, e.g. cover only few millimeters.

According to a further embodiment, for deploying a further raw material powder layer, the powder application device may be movable across the build area and the powder application device may comprise a receiving section for at least temporarily receiving part of the gas flow guide element while moving across the build area. The receiving section may comprise a cut-out, anopening and/or a recess into which a portion of the gas flow guide element may extend. Additionally or alternatively, the receiving section may generally partially surround the gas flow guide element. In general, the receiving section may be configured (e.g. sized and/or shaped) so as to allow for a relative movement between the powder application device and the gas flow guide element, preferably with a portion of the gas flow guide element being temporarily or even substantially constantly received within the receiving section.

In one example, the gas flow guide element extends within a non-parallel plane to the build area and the powder application device moves along an axis extending in parallel to or within said plane. In this context, the receiving section may be configured so as to enable this movement, i.e. so that the moving powder application device does not interfere with the gas flow guide element. For example, the receiving section may be provided in a region in which said plane and the powder application device intersect one another.

The invention further relates to a method for producing a three-dimensional workpiece by carrying out an additive layering process as defined by the appended process claim.

The method may comprise any further steps or features for providing any of the interactions or effects described above and in the following. For example, the method may further comprise a step of moving a gas flow guide element and/or powder application device according to the above or below examples. Also, the method may comprise arranging the gas flow guide elements and/or irradiation areas as previously discussed. This may relate to arranging the gas flow guide elements with respect to a grid or matrix pattern of irradiation units and/or irradiation areas in the above- or below-described manner. Note that the regions between the first and second edge regions in which the diverting of the gas flow and supplying of the fresh gas flow take place, may be substantially the same or adjacent regions. Also, they may generally correspond to a position of a gas flow guide element.

In the following, several embodiments of the present invention will be discussed with reference to the attached drawings, in which
- Fig. 1:: shows a schematic representation of a device for producing three-dimensional workpieces;
- Fig. 2:: shows a more detailed representation of the device of figure 1, including a gas flow guide element that is arranged oppositely to a build area;
- Fig. 3:: shows a detailed view of the gas flow guide element of the device of figure 1;
- Fig. 4:: shows a detailed view of a gas flow guide element according to a further embodiment;
- Fig. 5:: shows an arrangement of a plurality of gas flow guide elements to be used in a device according to a further embodiment;
- Figs. 6a, 6b:: show examples of moving a plurality of gas flow guide elements in parallel to the build area;
- Figs. 7a, 7b:: show examples of lifting a plurality of gas flow guide elements away from the build area; and
- Fig. 8:: shows a schematic view of a device according to a further embodiment.

In the following, different embodiments of devices according to the invention will be discussed, wherein said devicescarry out a method according to the invention. The same reference signs may be used for same or equivalent features throughout said embodiments.

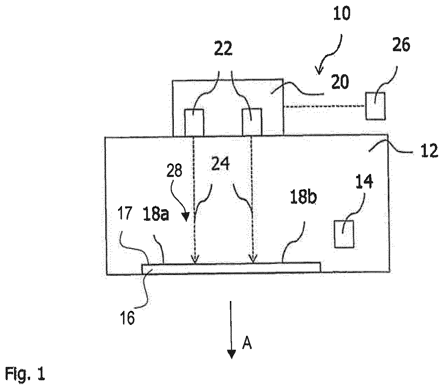

Figure 1 shows a device 10 for producing three-dimensional workpieces by selective laser melting. The device 10 comprises a process chamber 12. A powder application device 14, which is disposed in the process chamber 12, serves to apply a raw material powder onto a carrier 16. As indicated by an arrow A in Figure 1, the carrier 16 is designed to be displaceable in a vertical direction so that, with increasing construction height of a workpiece, as it is built up in layers from the raw material powder on the carrier 16, the carrier 16 can be moved downwards in the vertical direction. On its upper surface facing an irradiation system 20, the carrier 16 defines a build area 17 on which a workpiece can be built. On said build area 17, the raw material powder is deployed by the powder application device 14.

The irradiation system 20 is configured to selectively irradiate laser radiation onto the raw material powder applied onto the carrier 16. By means of the irradiation system 20, the raw material powder applied onto the carrier 16 may be subjected to laser radiation in a site-selective manner in dependence on the desired geometry of the workpiece that is to be produced. The irradiation system 20 comprises a plurality of irradiation units 22 wherein each irradiation unit 22 is associated with one irradiation area defined within an irradiation plane 28 that extends in parallel to carrier 16 (see following Figures). It is understood that the irradiation areas as well as the irradiation plane 28 represent virtual areas, wherein the irradiation plane 28 further contains an uppermost raw material powder layer that is next to be irradiated.

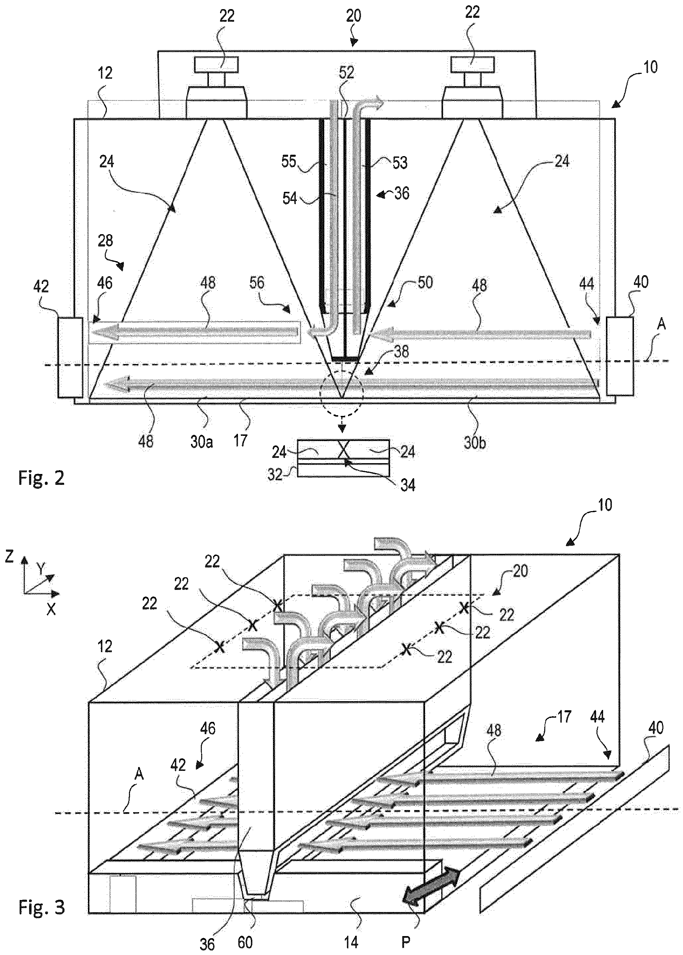

Each irradiation unit 22 is configured to selectively irradiate an electromagnetic or particle radiation beam 24 (e.g. a laser beam) onto the raw material powder applied onto a respectively assigned irradiation area. As discussed below with reference to Figure 3, the device 10 comprises six irradiation units 22 in total that are each arranged in a grid pattern and are assigned to an individual irradiation area (i.e., six irradiation areas in total). The irradiation units 22 selectively irradiate the raw material powder extending into a respectively assigned irradiation areas.

Each irradiation unit 22 may comprise a laser beam source. It is, however, also conceivable that plural irradiation units 22 are associated with a single laser beam source, wherein a radiation beam provided by the single radiation beam source, by suitable means such as, for example, beam splitters and/or mirrors, may be split and/or deflected as required so as to direct the radiation beam provided by the radiation beam source to the associated irradiation units 22. A laser beam source associated with only one irradiation unit 22 or with plural irradiation units 22 may, for example, comprise a diode pumped Ytterbium fibre laser emitting laser light at a wavelength of approximately 1070 to 1080 nm.

Further, each irradiation unit 22 may comprise an optical unit for guiding and/or processing a radiation beam 24 emitted by the radiation beam source and supplied to the irradiation unit 22. The optical unit may comprise a beam expander for expanding the radiation beam, a scanner and an object lens. Alternatively, the optical unit may comprise a beam expander including a focusing optic and a scanner unit. By means of the scanner unit, the position of the focus of the radiation beam 24 in the irradiation plane 28 (i.e., in a plane perpendicular to the beam path) can be changed and adapted. The scanner unit may be designed in the form of a galvanometer scanner and the object lens may be an f-theta object lens. The operation of the irradiation system 20 is controlled by means of a control unit 26.

By means of the control unit 26, each irradiation unit 22 is controlled such that the radiation beam 24 emitted by the irradiation unit 22 is irradiated onto the raw material powder applied within the respectively assigned irradiation area in a site selective manner and independent of the irradiation of other irradiation areas not associated with the irradiation unit 22 in question. In other words, each irradiation area defined on the carrier 16 (and/or in the irradiation plane 28) is individually and independently irradiated using a desired irradiation pattern. Thus, a large three-dimensional workpiece may be built-up on the carrier 16 in an additive layer construction process within a relatively short time and at reasonable costs by simultaneously irradiating said plurality of irradiation areas.

The process chamber 12 is sealable against the ambient atmosphere, i.e. against the environment surrounding the process chamber 12. As becomes apparent from the following figures, fresh gas is supplied to the process chamber 12 by means of a gas supply arrangement. The fresh gas supplied to the process chamber may be an inert gas such as, for example, Argon, Nitrogen or the like. It is, however, also conceivable to supply the process chamber 12 with air. The fresh gas is supplied to the process chamber 12 by means of a suitable conveying device such as, for example, a pump or a blower (not shown in the drawings).

Further, gas containing particulate impurities is discharged from the process chamber 12 with help of the gas supply arrangement as well as the gas flow guides elements discussed below. While the raw material powder applied onto the carrier 16 is selectively irradiated with electromagnetic or particle radiation, the fresh gas supplied to the process chamber 12 by means of the gas supply arrangement, upon flowing through the process chamber 12, is increasingly loaded with particulate impurities such as, for example, raw material powder particles or welding smoke particles and finally exits the process chamber 12 as gas containing particulate impurities (also referred to as "used gas"). Hence, particulate impurities generated in the process chamber 12 upon irradiating the raw material powder on the carrier 16 with electromagnetic or particle radiation are purged from the process chamber 12 by the gas flow guided through the process chamber 12. The gas containing particulate impurities is discharged from the process chamber 12 by means of a suitable conveying device such as, for example, a pump or a blower (not shown in the drawings). The gas containing particulate impurities which is discharged from the process chamber 12 may be directed through a filter (not shown in the drawings) and, after having passed the filter, may be recirculated into the process chamber 12 via the gas supply arrangement.

This becomes further evident from figure 2. In said figure, which contains a more detailed illustration of the device 10 according to figure 1, the process chamber 12 can again be seen. Also, the irradiation system 20 containing the two irradiation units 22 is shown. The irradiation units 22 face the build area 17. More specifically, it is shown that each irradiation unit 22 defines a conical irradiation space 24 containing the possible beam paths between the irradiation units 22 and the build area 17. Said beam paths may be set and varied by an optical unit, such as a scanner, of the irradiation units 22 in a generally known manner. Further, it becomes evident that each irradiation unit 22 is assigned to an individual irradiation area 30a,30b of the build area 17 (i.e, said irradiation areas 30a, 30b defining a share of the total irradiation area 28). Note that in figure 2, only two irradiation units 22 and irradiation areas 30a, 30b are shown. The further irradiation units 22 and irradiation areas 30a, 30b are arranged behind the depicted ones and are thus not visible in figure 2.

Figure 2 also includes an enlarged view marked as 32 which shows an overlap area 34 between the two adjacent irradiation areas 30a, 30b.

In a position opposite to and facing said overlap area 34, a gas flow guide element 36 is arranged. As evident from Figure 3 discussed below, said gas flow guide element 36 is designed as a generally planar member that extends in a plane running perpendicular to the build area 17. Also, an underside of the gas flow guide element 36 is slightly spaced apart from the build area 17, so that a vertical gap 38 remains therebetween. Note that the gas flow guide element 36 is also positioned opposite to a central region of the build area 17 and thus equally spaced apart from first and second edge regions 44, 46 thereof as discussed below. Moreover, the gas flow guide element 36 is shaped so as to not extend into the irradiation spaces 24 of the irradiation units 22. That is, the gas flow guide element 36 does not interfere with any radiation omitted by the irradiation units 22, so that the irradiation areas 30a,30b can be fully irradiated.

From figure 2, the previously discussed gas flow through the process chamber 12 becomes more evident. Specifically, a gas inlet 40 to the process chamber 12 as well as a gas outlet 42 from the process chamber 12 are shown, which both belong to a non-specifically illustrated gas supply arrangement of the device 10. The gas inlet 40 and gas outlet 42 are arranged at opposite edge regions 44, 46 of the build area 17. More precisely and as shown in figure 3, the gas inlet 40 is arranged at a first edge region 44 of the build area 17, whereas the gas outlet 42 is arranged at an opposite second edge region 46 of the build area 17. Note that the build area 17 has a rectangular shape, so that the first and second edge regions 44, 46 comprise opposite sides of said rectangular shape.

Coming back to figure 2, it can be seen that the gas inlet 40 provides a gas flow 48 which is directed along an axis A extending between the opposite edge regions 44, 46. Said axis A will also be referred to as "gas flow axis" in the following. Specifically, the gas flow 48 that enters the process chamber 12 at the first edge region 44 is a fresh gas. It then flows towards the gas outlet 42 across the build area 17 while picking up the previously discussed particular impurities. Thus, it leaves the process chamber 12 via the gas outlet 42 as used gas that is recycled within a non-depicted gas circuit of the gas supply arrangement in a generally known manner (e.g. by means of filter units).

As shown in figure 2, a certain share of the gas flow 48 is, however, diverted away from the build area 17 by means of the gas flow guide element 36. Specifically, said share of the gas flow 48 (cf. right upper arrow 48 in figure 2) enters a gas diversion portion 50 at an underside of the gas flow guide element 36 close to the build area 17, said gas diversion portion 50 comprising an opening. Following that, the entering share of the gas flow 48 hits a central wall 52 within the gas flow guide element 36, thereby being diverted vertically upwards through a first channel portion 53 of the gas flow guide element 36 and then away from the build area 17. As indicated by a respective upper arrow in figure 2, the diverted share of the gas flow 48 is then guided away from the gas flow guide element 36 into the non-depicted gas circuit of the gas supply arrangement.

Note that due to the arrangement of the gas flow guide element 36, the diverted share of the gas flow 48 has already passed the irradiation area 30b close to the gas inlet 40 and thus already picked up some particular impurities. Therefore, prior to reaching the adjacent irradiation area 30a, a part of the gas flow 48 is deliberately diverted away from the build area 17 by means of the gas flow guide element 36 to limit the amount of impurities which are carried over into the adjacent build area 30a. On the other hand, another share of the gas flow 48 is not diverted by the gas flow guide element 36 due to flowing through the vertical gap 38 and straightforward the gas outlet 42.

In fact, the gas flow guide element 36 even provides a fresh gas flow 54. More precisely, on a side facing away from the gas diversion portion 50 and instead facing the gas outlet 42, the gas flow guide element 36 comprises a gas supply portion 56. As indicated by respective arrows in figure 2, the fresh gas flow 54 is supplied from the non-depicted gas circuit into a second channel portion 55 of the gas flow guide element 36. Said second channel portion 55 extends in parallel to the first channel portion 53 but is separated therefrom by means of the central wall 52. In consequence, the fresh gas flow 54 enters the process chamber 12 by flowing through the gas supply portion 56 which, moreover, is shaped to direct the fresh gas flow 54 tangentially along the build area 17. Specifically, it can be seen that the fresh gas flow 54 extends in the same direction as the gas flow 48 and thus flows across the build area 17 towards the gas outlet 42. Again, due to the position of the gas flow guide element 36, this means that irradiation area 30a close of the gas outlet 42 is supplied with a defined volume of the fresh gas flow 54 in addition to the gas flow 48 flowing through the vertical gap 38.

In the shown example, the operation of the device 10 is controlled so that the volume of gas that is diverted away from the build area 17 as well as volume of the fresh gas flow 54 which is supplied to the build area 17, both by the gas flow guide element 36, approximately balance each other.

Overall, the gas flow supply element 36 thus ensures that the gas flow 48 is at least partially refreshed in predetermined intervals, wherein said intervals are defined so as to each contain one of the irradiation areas 30a,30b. This way, it is ensured that each irradiation area 30a,30b is supplied with at least a certain share of fresh gas, which increases the overall quality of the production process and the resulting workpiece. In the shown example, the irradiation area 30b close to the gas inlet 40 is supplied with fresh gas directly from said gas inlet 40, whereas the irradiation area 30a close to the gas outlet 42 is supplied with fresh gas from the gas supply portion 56 of the gas flow guide element 36.

With reference to figure 3, the configuration of the device 10 according to figures 1 and 2 will be further discussed. Figure 3 shows a perspective view of part of the process chamber 12. In this figure, the arrangement of the irradiation units 22 becomes more evident. Specifically, it can be seen that the irradiation units 22 are arranged in a three-by-two grid or matrix pattern (i.e., three rows of two irradiation units 22). Accordingly, three rows of two irradiation units 22 are provided with each row extending along the gas flow axis A. On the other hand, two columns of three irradiation units 22 are formed, with one column being arranged on each side of the gas flow guide element 36. That is, when viewed along the gas flow axis A, a first column of three irradiation units 22 is positioned between the gas flow guide element 36 and the gas inlet 40 and a second column of three irradiation units 22 is arranged on the opposite side between the gas flow guide element 36 and the gas outlet 42. As explained above, each irradiation unit 22 is assigned to an individual irradiation area, wherein the frontmost irradiation units 22 in figure 3 are assigned to the irradiation areas 30a,30b of figure 2. The irradiation areas are all equally sized and rectangularly shaped, wherein each row of the grid pattern of irradiation units 22 defines two adjacent irradiation areas which overlap below of the guide element 36. This corresponds to the adjacent irradiation areas 30a,30b forming the overlap 34 in figure 2. It is thus also evident that the irradiation areas 30a,30b as well as the further irradiation areas for each single row of the grid pattern of irradiation units 22 (not shown) are arranged one behind the other along the gas flow axis A.

In sum, for each row of the grid pattern, the gas flow guide element 36 is thus arranged between two adjacent irradiation areas when viewed along the gas flow axis A and, more precisely, arranged opposite to an overlap area between the two adjacent irradiation areas for each row of the grid pattern.

The gas flow guide element 36, on the other hand, completely spans across the build area 17. Specifically, a standard coordinate system for the device 10 is shown, in which the Z-axis corresponds to the so-called build axis and the X- and Y-axis define a plane that extends in parallel to the irradiation plane 28 as well as the build area 17. Therefore, it can be seen that the gas flow guide element 36 extends in a plane defined by the Y- and Z-axis and is arranged so as to span across the build area 17 when viewed along the Y-axis. To put it differently, the gas flow guide element 36 extends between two opposing edge regions of the build area 17, which are different from the first and second edge regions 44, 46 at which the gas inlet and outlet 40, 42 are arranged. Again, these edge regions correspond to opposite sides of the rectangularly shaped build area 17.

Due to this arrangement of the gas flow guide element 36, no share of the gas flow 48 can flow from the gas inlet 40 to the gas outlet 42 without interacting with the gas flow guide element 36 (i.e., by being diverted thereby or by passing underneath it). In particular when viewed along the Y-axis, the gas flow 48 will at least partially be diverted away from the build area 17 at each position along said axis. Similarly, all regions of the build area 17 between the gas flow guide element 36 and the gas outlet 42 are supplied with a fresh gas flow 54 from the gas flow guide element 36. In consequence, for each row of the grid pattern of irradiation units 22, the respectively adjacent irradiation areas will each be supplied with a certain share of fresh gas as explained above with reference to figure 2.

In figure 3, the powder application device 14 is shown in greater detail. In a generally known manner, said application device 14 moves across the build area 17 along an axis P extending in parallel to the Y-axis of figure 3 when deploying a new raw material powder layer. To not interfere with the gas flow guide element 36, which is generally stationary in the shown example, the powder application device 14 comprises a receiving section 60 in a region in which it would otherwise interfere with the gas flow guide element 36. Specifically, the powder application device 14 intersects the plane in which the gas flow guide element 36 extends. In said region of intersection, a cutout is formed within the powder application device 14 so as to receive an underside portion of the gas flow guide element 36. Said cutout forms the receiving section 60 of the powder application device 14.

In figure 3, the powder application device 14 is shown in an inactive position outside the build area 17, from which it can move to the opposite side of the build area 17 while deploying a new uppermost raw material powder layer. As explained above, the gas flow guide element 36 spans across of the build area 17 and even slightly into a region in which the powder application device 14 is located when assuming its inactive state. Thus, the gas flow guide element 36 extends into or, in other words, engages with the receiving section 60 even in said inactive state of the powder application device 14. This, however, is not a mandatory aspect of this embodiment or of the disclosure in general.

As further evident from figure 3, the gas flow guide element 36 and the powder application device 14 are arranged relative to one another in such a manner, that the powder application device 14 also move between opposite edge regions of the build area 17 along the axis P without interfering with the gas flow guide element 36 at any position.

Overall, due to providing the receiving section 60, the gas flow guide element 36 can be positioned as close as possible to the build area 17 and may even remain stationary in said position, while still allowing the powder application device 14 to operate as usual.

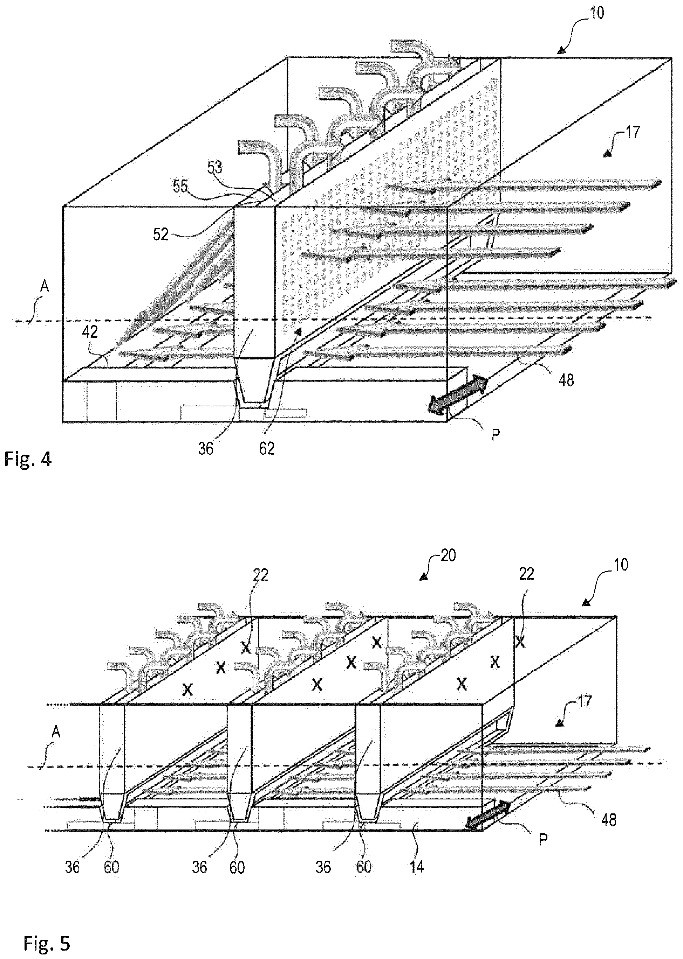

In figure 4, a further embodiment of the device 10 is shown which is generally similar to the embodiment of the previous figures apart from the design of the gas flow guide element 36. More precisely, said gas flow guide element 36 has a perforated portion 62 which is provided with a large number of holes (or openings) which are arranged in a regular grid pattern. These holes define access openings through which the gas flow 48 may enter the gas flow guide element 36 and hit the central wall 52. Thereby, it may be diverted away from the build area 17 into the first channel portion 53 . On the side of the gas flow guide element 36 facing the gas outlet 42, a similar perforated portion 62 comprising a similar grid pattern of openings is provided (not visible in Figure 4). A share of the fresh gas flow 54 passing through the second channel portion 55 may flow out of the gas flow guide element 36 through said further perforated portion 62. This share of the fresh gas flow 54 passing through the perforated portion 62 is sucked into the gas outlet 42. This is indicated by diagonal arrows which point towards the gas outlet 42 in figure 4.

Overall, this embodiment may help to reduce turbulences when the gas flow 48 reaches the gas flow guide element 36 by providing a defined possibility to bypass any of the vertical gap 38 or the gas flow diversion portion 50 of figure 1. Likewise, the perforated portion 62 on the side of the gas flow guide element 36 facing the gas outlet 42 provides a possibility to bypass the gas supply portion 56. This may help to limit turbulences in the fresh gas flow 54.

Figures 5 through 7 show further embodiments of the device 10 which are generally similar to those of the previous figures apart from the number and/or possible movements of the gas flow guide element 36. For example, in figure 5, three gas flow guide element 36 are provided. These extend in parallel to one another and are spaced apart from one another along the gas flow axis A. Moreover, it can be seen that the irradiation system 20 comprises a grid pattern of three-by-four irradiation units 22 (i.e., three rows of four irradiation units 22, with each row extending along the gas flow axis A). The irradiation units 22 are indicated as crosses above the build area 17, wherein not all of these crosses are provided with a respective reference signs.

Each irradiation unit 22 is again to assigned an rectangular individual irradiation area not shown). Thus, for each row of irradiation units 22, four irradiation areas are defined which are arranged one behind the other along the gas flow axis A, wherein two respectively adjacent irradiation areas slightly overlap one another (cf. Fig. 2 and overlap 34). Accordingly, the gas flow guide elements 36 are again arranged in such a manner, that when viewed along the gas flow axis A, two adjacent irradiation areas of each row of irradiation units 22 are, figuratively speaking, separated by a respective gas flow guide element 36. More precisely, the gas flow guide elements 36 are arranged oppositely to overlaps between such adjacent irradiation areas, so that the gas flow 48 cannot directly pass between said irradiation areas without being at least partially diverted away from the build area 17. Also, the gas flow guide elements 36 supply a fresh gas flow 54 to one of these adjacent irradiation areas as discussed above with reference to Figures 2 and 3.

In summary, figure 5 underlines the concept of refreshing the gas flow 48 across the build area 17 in predetermined intervals, said intervals being defined by the position of the gas flow guide elements 36. Likewise, it again becomes evident that the gas flow guide elements 36 can be arranged in such a manner, so that for each irradiation area for a plurality of irradiation units 22, the gas flow 48 contains at least a predetermined share of fresh gas.

For the sake of completeness, it should also be noted that the powder application device 14 of figure 5 comprises three receiving sections 60 which are each designed similarly to the embodiment of figure 3. Accordingly, the receiving sections 60 are positioned and shaped so as to allow a movement of the powder application device 14 across the build area 17 along the axis P without interfering with any of the gas flow guide elements 36.

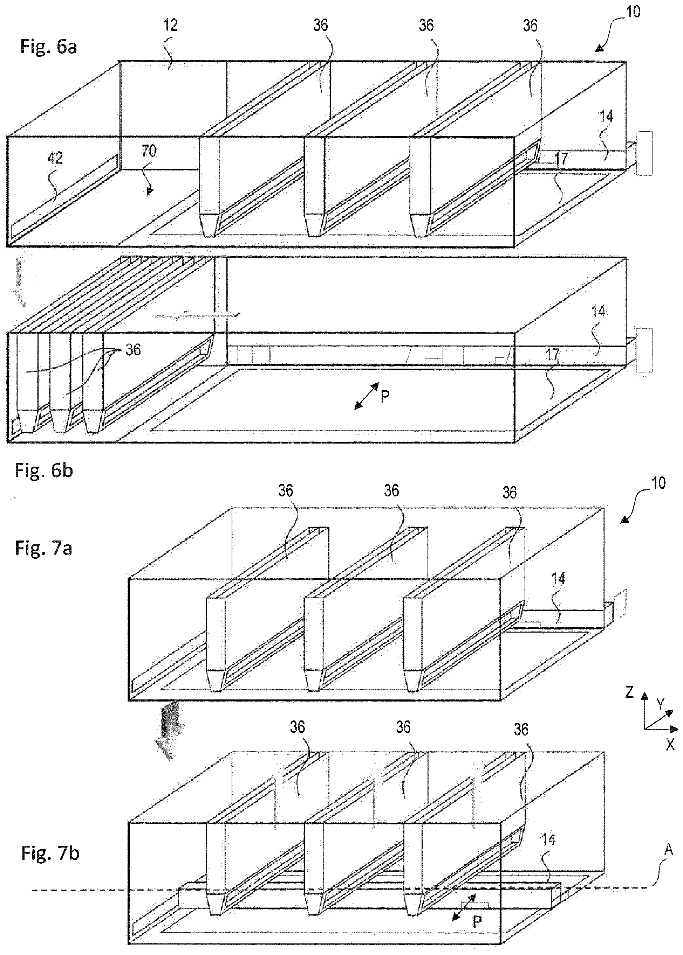

Figures 6a,b and 7a,b show further embodiments of the device 10 which are similar to the embodiment of figure 5, apart from the three gas flow guide elements 36 being movable relative to the build area 17. For example, in figures 6a,b, the gas flow guide elements 36 are each movable along the X-axis. For doing so, standard drive units may be provided, similar to the drive units of the powder application device 14. In figure 6a, the gas flow guide elements 36 have already started moving away from their active positions which correspond to those of figure 5. Accordingly, they started moving along the X-axis towards a storing region 70 within the process chamber 12, in which the gas flow guide elements 36 may be at least temporarily stored or parked outside of the build area 17. In other words, the storage region 70 allows for a movement of the gas flow guide elements 36 to a position remote from the build area 17 and in which the gas flow guide elements 36 are not arranged oppositely to any irradiation areas. This state is shown in figure 6b. In consequence, the build area 17 is completely free of obstacles, so that the powder application device 14 can move across the build area 17 for deploying a new uppermost raw material powder layer (cf. Figure 6b). This means that the powder application device 14 can, optionally, also be designed without any of the receiving sections 60 of figure 5, since no interferences with the gas flow guide elements 36 are possible.

When operating the device 10, a controller may thus detect the need for a new uppermost raw material powder layer to be deployed and that the powder application device 14 should hence be activated. In consequence, the gas flow guide elements 36 will move from their positions opposite to the build area 17 to their positions within the storing region 70 remote from the build area 17 (cf. Figure 6b). After the powder application device 14 has completed deploying the new raw material powder layer, the gas flow guide elements 36 are moved back into their original positions above the build area 17, said positions corresponding to those of Figure 5.

Figures 7a,b show an alternative for selectively moving the gas flow guide elements 36 in accordance with an operation of the powder application device 14. In this case, the gas flow guide elements 36 can be selectively lifted away from the build area 17 to allow the powder application device 14 to pass underneath them while deploying a new uppermost raw material powder layer. In other words, the gas flow guide elements 36 can be moved up and down the Z-axis which extends orthogonally to the build area 17. Again, this does not make it necessary to configure the powder application device 14 with dedicated receiving sections 60. Also, in the state of figure 7a, the powder application devices 36 may be arranged very closely to the build area 17 so as to even contact the uppermost raw material powder layer. This way, the vertical gap 38 of figure 1 may be significantly reduced or even decreased to zero, so that less or even no share of the gas flow 48 can directly pass from adjacent one irradiation area to the next when viewed along the gas flow axis A.

Note that in Figures 5 to 7, each fresh gas flow 54 that is provided by one of the gas flow guide elements 36 and directed towards an adjacent gas flow guide element 36 represents a gas flow similar to the gas flow 48 of figures 1 to 4, since it will be partially diverted away from the build area 17 by the respectively adjacent gas flow guide element 36.

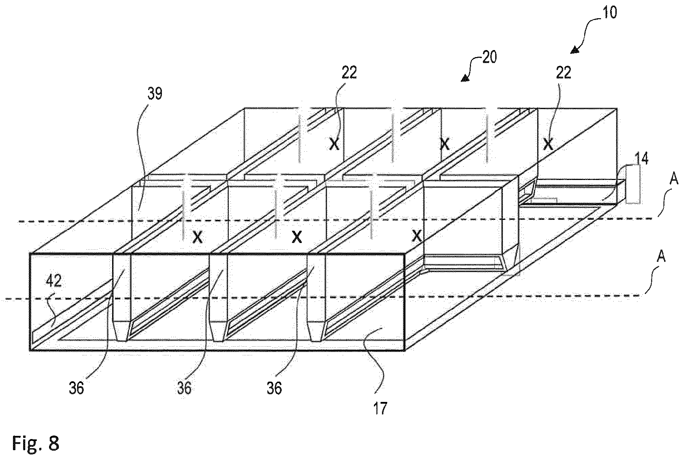

Finally, Figure 8 shows a further embodiment of a device 10 which is generally configured similar to the device of figure 5. In addition thereto, however, a central gas flow guide element 39 is provided intersecting all of the remaining gas flow guide elements 36 and extending along the gas flow axis A. The central gas flow guide element 39 is arranged so as to substantially completely isolate the single irradiation areas from one another in terms of an exchange of gas flows therebetween.

As further shown in Figure 8, the central gas flow guide element 39 can provide such an effect for an irradiation system 20 comprising two rows of three irradiation units 22. Accordingly, each irradiation area assigned to one of the irradiation units 22 and arranged oppositely thereto is supplied with fresh gas from either the gas inlet 40 (not shown) and/or an adjacent gas flow element 36. To underline this aspect, two gas flow axes A are shown in figure 8, one for each row of irradiation units 22 of the irradiation system 20.

Also, similar to the embodiment of Figures 7a,7b, the gas flow guide elements 36 and the central gas flow guide element 39 can be lifted away from the build area 17 for not interfering with the powder application device 14 (cf. arrows in Figure 8).

## Claims

1. Device (10) for producing a three-dimensional workpiece by carrying out an additive layering process,
wherein the device (10) comprises:
- a build area (17) that is configured to receive a raw material powder layer;
- a powder application device (14) that is configured to deploy the raw material powder layer onto the build area (17);
- an irradiation system (20) that is configured to selectively irradiate the raw material powder layer on the build area (17);
wherein the device (10) is configured to provide at least one gas flow (48) that is directed along an axis (A) extending from a first edge region (44) of the build area (17) towards a second edge region (46) of the build area (17);
wherein the device (10) comprises at least one gas flow guide element (36) that is configured to divert at least part of the gas flow (48) away from the build area (17) before said gas flow (48) reaches the second edge region (46);
wherein the gas flow guide element (36) comprises a gas diversion portion (50) configured to receive gas in order to divert the gas away from the build area (17), such that the gas flow guide element (36) is configured to remove the at least part of the gas flow (48) on its way across the build area (17); and
wherein the gas flow guide element (36) comprises a gas supply portion (56) that is configured to supply a fresh gas flow (54) along the build area (17), wherein said fresh gas flow (54) is directed in the same direction as the gas flow (48) before it is partially diverted away from the build area (17).

2. Device (10) according to claim 1,
wherein the gas flow guide element (36) is located between the first and second edge region (44, 46) of the build area (17) and, preferably, wherein a distance between the gas flow guide element (36) and a central portion of the build area (17) is the same or smaller than a distance between the gas flow guide element (36) and at least one of the first and second edge regions (44, 46).

3. Device (10) according to one of the previous claims,
- wherein the irradiation system (20) comprises at least two irradiation units (22) that are each assigned to an individual irradiation area (30a,30b) of the build area (17) to selectively irradiate a portion of the raw material powder layer extending into said irradiation area (30a,30b); and
- wherein the gas flow guide element (36) is located in between said irradiation areas (30a,30b) or wherein the gas flow guide element (36) is located close or opposite to a region wherein said irradiation areas (30a,30b) overlap.

4. Device (10) according to claim 3,
- wherein the irradiation areas (30a,30b) are arranged, with an optional partial overlap (34), one behind the other along a gas flow axis (A) extending from the first edge region (44) towards the second edge region (46).

5. Device (10) according to claim 4,
- wherein the irradiation system (20) comprises at least one further irradiation unit (22), assigned to an irradiation area (30a,30b) that is defined so that the plurality of irradiation areas (30a,30b) is arranged one behind the other along said gas flow axis (A), with an optional partial overlap between adjacent irradiation areas (30a,30b); and
- wherein for each group of two adjacent irradiation areas (30a,30b), at least one gas flow guide element (36) is provided that is located between said two adjacent irradiation areas (30a,30b) or wherein said gas flow guide element (36) is located close or opposite to a region wherein said two adjacent irradiation areas (30a,30b) overlap.

6. Device (10) according to any of the previous claims,
wherein the gas flow guide element (36) extends from a region opposite the build area (17) towards said build area (17) and, optionally, wherein a distance between the gas flow guide element (36) and the build area (17) is less than 10 cm.

7. Device (10) according to any of the previous claims,
wherein the gas flow guide element (36) is configured to extend outside an irradiation beam path between the irradiation system (20) and the build area (17).

8. Device (10) according to any of the previous claims,
wherein the gas flow guide element (36) is configured to collect particles that are carried by the diverted gas flow into the gas flow guide element (36).

9. Device (10) according to any of the previous claims,
wherein the gas flow guide element (36) comprises at least one opening and in particular a perforated or porous portion (62), that allows one of the following:
- at least part of the gas flow (48) to pass into the gas flow guide element (36) at positions remote from a gas diversion portion (50) close to the build area (17), said gas diversion portion (50) containing an opening to receive part of the gas flow (48) for diverting it away from the build area (17); or
- at least part of the fresh gas flow (54) to pass out of the gas flow guide element (36) at positions remote from the gas supply portion (56), said gas supply portion (56) being preferably arranged close to the build area (17).

10. Device (10) according to any of the previous claims,
wherein the gas flow guide element (36) and the build area (17) are movable relative to each other according to at least one of the following:
- the gas flow guide element (36) being movable relative to the build area (17) in parallel to the build area (17);
- the gas flow guide element (36) being movable relative to the build area (17) between a position opposite to the build area (17) and a position remote from the build area (17);
- the gas flow guide element (36) being movable relative to the build area (17) along an axis (Z) extending at an angle to the build area (17);
- the build area (17) being movable relative to the gas flow guide element (36) in parallel to the gas flow guide element (36);
- the build area (17) being movable relative to the gas flow guide element (36) between a position opposite to the gas flow guide element (36) and a position remote from the gas flow guide element (36); and
- the build area (36) being movable relative to the gas flow guide element (36) along an axis (Z) extending at an angle to the build area (17).

11. Device (10) according to claim 10,
wherein the gas flow guide element (36) is movable relative to the build area (17) in accordance with an operation of the powder application device (14).

12. Device (10) according to claims 10 or 11,
wherein the device (10) is configured to move the gas flow guide element (36) relative to the build area (17) before and/or after the powder application device (14) deploys a further layer of raw material powder onto the build area (17).

13. Device (10) according to any of the previous claims,
wherein for deploying a further raw material powder layer, the powder application device (14) is movable across the build area (17); and
wherein the powder application device (14) comprises a receiving section (60) for at least temporarily receiving part of the gas flow guide element (36) while moving across the build area (17).

14. Method for producing a three-dimensional workpiece by carrying out an additive layering process by means of a device (10) according to one of the previous claims,
wherein the method comprises the following steps:
- deploying a raw material powder layer onto a build area (17);
- supplying at least one gas flow (48) from a first edge region (44) of the build area (17) towards a second edge region (46) of the build area (17);
- diverting at least a part of the gas flow (48) away from the build area (36) before said gas flow (48) reaches the second edge region (46); and
- supplying a fresh gas flow (54) along the build area (17), wherein said fresh gas flow (54) is directed in the same direction as the gas flow (48) before it is partially diverted away from the build area (17),
wherein diverting the gas flow (48) and supplying the fresh gas flow (54) takes place in regions between the first and second edge regions (44, 46).

## Patentansprüche

1. Vorrichtung (10) zur Herstellung eines dreidimensionalen Werkstücks durch Durchführen eines additiven Schichtbauverfahrens,
wobei die Vorrichtung (10) umfasst:
- eine Baufläche (17), die konfiguriert ist, eine Rohstoffpulverschicht aufzunehmen;
- eine Pulverauftragsvorrichtung (14), die konfiguriert ist, die Rohstoffpulverschicht auf die Baufläche (17) aufzubringen;
- ein Bestrahlungssystem (20), das konfiguriert ist, die Rohstoffpulverschicht auf der Baufläche (17) selektiv zu bestrahlen;
wobei die Vorrichtung (10) konfiguriert ist, mindestens einen Gasstrom (48) bereitzustellen, der entlang einer Achse (A) gerichtet ist, die sich von einem ersten Randbereich (44) der Baufläche (17) zu einem zweiten Randbereich (46) der Baufläche (17) erstreckt;
wobei die Vorrichtung (10) mindestens ein Gasströmungsleitelement (36) umfasst, das konfiguriert ist, mindestens einen Teil des Gasstroms (48) von der Baufläche (17) wegzuleiten, bevor der Gasstrom (48) den zweiten Randbereich (46) erreicht;
wobei das Gasströmungsleitelement (36) einen Gasumleitungsabschnitt (50) umfasst, der konfiguriert ist, Gas aufzunehmen, um das Gas von der Baufläche (17) wegzuleiten, so dass das Gasströmungsleitelement (36) konfiguriert ist, den mindestens einen Teil des Gasstroms (48) auf seinem Weg über die Baufläche (17) zu entfernen; und
wobei das Gasströmungsleitelement (36) einen Gaszufuhrabschnitt (56) umfasst, der konfiguriert ist, einen Frischgasstrom (54) entlang der Baufläche (17) zuzuführen, wobei der Frischgasstrom (54) in die gleiche Richtung gerichtet ist wie der Gasstrom (48), bevor er teilweise von der Baufläche (17) weggeleitet wird.

2. Vorrichtung (10) nach Anspruch 1,
wobei das Gasströmungsleitelement (36) zwischen dem ersten und dem zweiten Randbereich (44, 46) der Baufläche (17) angeordnet ist und, vorzugsweise, wobei ein Abstand zwischen dem Gasströmungsleitelement (36) und einem zentralen Abschnitt der Baufläche (17) gleich oder kleiner ist als ein Abstand zwischen dem Gasströmungsleitelement (36) und dem ersten und/oder dem zweiten Randbereich (44, 46).

3. Vorrichtung (10) nach einem der vorhergehenden Ansprüche,
- wobei das Bestrahlungssystem (20) mindestens zwei Bestrahlungseinheiten (22) umfasst, die jeweils einem individuellen Bestrahlungsbereich (30a, 30b) der Baufläche (17) zugeordnet sind, um einen Abschnitt der Rohstoffpulverschicht, der sich in den Bestrahlungsbereich (30a, 30b) erstreckt, selektiv zu bestrahlen; und
- wobei das Gasströmungsleitelement (36) zwischen den Bestrahlungsbereichen (30a, 30b) angeordnet ist oder wobei das Gasströmungsleitelement (36) nahe bei oder gegenüber einem Bereich angeordnet ist, in dem sich die Bestrahlungsbereiche (30a, 30b) überlappen.

4. Vorrichtung (10) nach Anspruch 3,
- wobei die Bestrahlungsbereiche (30a, 30b) mit einer optionalen teilweisen Überlappung (34) hintereinander entlang einer Gasströmungsachse (A) angeordnet sind, die sich von dem ersten Randbereich (44) zu dem zweiten Randbereich (46) erstreckt.

5. Vorrichtung (10) nach Anspruch 4,
- wobei das Bestrahlungssystem (20) mindestens eine weitere Bestrahlungseinheit (22) umfasst, die einem Bestrahlungsbereich (30a, 30b) zugeordnet ist, der so definiert ist, dass die Mehrzahl von Bestrahlungsbereichen (30a, 30b) hintereinander entlang der Gasströmungsachse (A) angeordnet ist, mit einer optionalen teilweisen Überlappung zwischen benachbarten Bestrahlungsbereichen (30a, 30b); und
- wobei für jede Gruppe von zwei benachbarten Bestrahlungsbereichen (30a, 30b) mindestens ein Gasströmungsleitelement (36) vorgesehen ist, das zwischen den zwei benachbarten Bestrahlungsbereichen (30a, 30b) angeordnet ist, oder wobei das Gasströmungsleitelement (36) nahe bei oder gegenüber einem Bereich angeordnet ist, in dem sich die zwei benachbarten Bestrahlungsbereiche (30a, 30b) überlappen.

6. Vorrichtung (10) nach einem der vorhergehenden Ansprüche,
wobei sich das Gasströmungsleitelement (36) von einem Bereich gegenüber der Baufläche (17) in Richtung der Baufläche (17) erstreckt und, optional, wobei ein Abstand zwischen dem Gasströmungsleitelement (36) und der Baufläche (17) weniger als 10 cm beträgt.

7. Vorrichtung (10) nach einem der vorhergehenden Ansprüche,
wobei das Gasströmungsleitelement (36) so konfiguriert ist, dass es sich außerhalb eines Bestrahlungsstrahlengangs zwischen dem Bestrahlungssystem (20) und der Baufläche (17) erstreckt.

8. Vorrichtung (10) nach einem der vorhergehenden Ansprüche,
wobei das Gasströmungsleitelement (36) konfiguriert ist, Partikel aufzufangen, die von dem umgeleiteten Gasstrom in das Gasströmungsleitelement (36) getragen werden.

9. Vorrichtung (10) nach einem der vorhergehenden Ansprüche,
wobei das Gasströmungsleitelement (36) mindestens eine Öffnung und insbesondere einen perforierten oder porösen Abschnitt (62) aufweist, die/der ermöglicht, dass:
- zumindest ein Teil des Gasstroms (48) an Positionen in das Gasströmungsleitelement (36) eintritt, die von einem Gasumleitungsabschnitt (50) in der Nähe der Baufläche (17) entfernt sind, wobei der Gasumleitungsabschnitt (50) eine Öffnung umfasst, um einen Teil des Gasstroms (48) aufzunehmen, um ihn von der Baufläche (17) wegzuleiten; und/oder
- zumindest ein Teil des Frischgasstroms (54) an Positionen aus dem Gasströmungsleitelement (36) austritt, die von dem Gaszufuhrabschnitt (56) entfernt sind, wobei der Gaszufuhrabschnitt (56) vorzugsweise in der Nähe der Baufläche (17) angeordnet ist.

10. Vorrichtung (10) nach einem der vorhergehenden Ansprüche,
wobei das Gasströmungsleitelement (36) und die Baufläche (17) wie folgt relativ zueinander beweglich sind:
- das Gasströmungsleitelement ist (36) relativ zu der Baufläche (17) parallel zu der Baufläche (17) beweglich; und/oder
- das Gasströmungsleitelement (36) ist relativ zu der Baufläche (17) zwischen einer Position gegenüber der Baufläche (17) und einer Position entfernt von der Baufläche (17) beweglich; und/oder
- das Gasströmungsleitelement (36) ist relativ zu der Baufläche (17) entlang einer Achse (Z) beweglich, die sich in einem Winkel zu der Baufläche (17) erstreckt; und/oder
- die Baufläche (17) ist relativ zu dem Gasströmungsleitelement (36) parallel zu dem Gasströmungsleitelement (36) beweglich; und/oder
- die Baufläche (17) ist relativ zu dem Gasströmungsleitelement (36) zwischen einer dem Gasströmungsleitelement (36) gegenüberliegenden Position und einer von dem Gasströmungsleitelement (36) entfernten Position beweglich; und/oder
- die Baufläche (36) ist relativ zu dem Gasströmungsleitelement (36) entlang einer Achse (Z) beweglich, die sich in einem Winkel zu der Baufläche (17) erstreckt.

11. Vorrichtung (10) nach Anspruch 10,
wobei das Gasströmungsleitelement (36) in Abhängigkeit von einem Betrieb der Pulverauftragsvorrichtung (14) relativ zu der Baufläche (17) beweglich ist.

12. Vorrichtung (10) nach einem der Ansprüche 10 oder 11,
wobei die Vorrichtung (10) konfiguriert ist, das Gasströmungsleitelement (36) relativ zu der Baufläche (17) zu bewegen, bevor und/oder nachdem die Pulverauftragsvorrichtung (14) eine weitere Schicht Rohstoffpulver auf die Baufläche (17) aufträgt.

13. Vorrichtung (10) nach einem der vorhergehenden Ansprüche,
wobei zum Auftragen einer weiteren Rohstoffpulverschicht die Pulverauftragsvorrichtung (14) über die Baufläche (17) bewegbar ist; und
wobei die Pulverauftragsvorrichtung (14) einen Aufnahmeabschnitt (60) zur zumindest vorübergehenden Aufnahme eines Teils des Gasströmungsleitelements (36) während der Bewegung über die Baufläche (17) aufweist.

14. Verfahren zur Herstellung eines dreidimensionalen Werkstücks durch Durchführen eines additiven Schichtbauverfahrens mittels einer Vorrichtung (10) nach einem der vorhergehenden Ansprüche,
wobei das Verfahren die folgenden Schritte umfasst:
- Auftragen einer Rohstoffpulverschicht auf eine Baufläche (17);
- Zuführen mindestens eines Gasstroms (48) von einem ersten Randbereich (44) der Baufläche (17) zu einem zweiten Randbereich (46) der Baufläche (17);
- Leiten mindestens eines Teils des Gasstroms (48) weg von der Baufläche (36), bevor der Gasstrom (48) den zweiten Randbereich (46) erreicht; und
- Zuführen eines Frischgasstroms (54) entlang der Baufläche (17), wobei der Frischgasstrom (54) in die gleiche Richtung wie der Gasstrom (48) gerichtet ist, bevor er teilweise von der Baufläche (17) weggeleitet wird,
wobei die Umleitung des Gasstroms (48) und die Zufuhr des Frischgasstroms (54) in Bereichen zwischen dem ersten und dem zweiten Randbereich (44, 46) erfolgt.

## Revendications

1. Dispositif (10) pour produire une pièce de travail tridimensionnelle en exécutant un processus de stratification additive,
dans lequel le dispositif (10) comprend :
- une zone (17) de garnissage qui est configurée pour recevoir une couche de poudre de matière brute ;
- un dispositif (14) d'application de poudre qui est configuré pour déployer la couche de poudre de matière brute sur la zone (17) de garnissage ;
- un système (20) d'irradiation qui est configuré pour irradier sélectivement la couche de poudre de matière brute sur la zone (17) de garnissage ;
dans lequel le dispositif (10) est configuré pour fournir au moins un flux (48) de gaz qui est dirigé le long d'un axe (A) s'étendant depuis une première région de bord (44) de la zone (17) de garnissage vers une deuxième région de bord (46) de la zone (17) de garnissage ;
dans lequel le dispositif (10) comprend au moins un élément (36) de guidage de flux de gaz qui est configuré pour détourner au moins une partie du flux (48) de gaz à l'écart de la zone (17) de garnissage avant que ledit flux (48) de gaz n'atteigne la deuxième région de bord (46) ;
dans lequel l'élément (36) de guidage de flux de gaz comprend une partie (50) de détournement de gaz configurée pour recevoir du gaz afin de détourner le gaz à l'écart de la zone (17) de garnissage, de telle sorte que l'élément (36) de guidage de flux de gaz est configuré pour supprimer l'au moins une partie du flux (48) de gaz sur son chemin au travers de la zone (17) de garnissage ; et
dans lequel l'élément (36) de guidage de flux de gaz comprend une partie (56) d'amenée de gaz qui est configurée pour amener un flux frais (54) de gaz le long de la zone (17) de garnissage, dans lequel ledit flux frais (54) de gaz est dirigé dans la même direction que le flux (48) de gaz avant qu'il ne soit partiellement détourné à l'écart de la zone (17) de garnissage.

2. Dispositif (10) selon la revendication 1,
dans lequel l'élément (36) de guidage de flux de gaz est situé entre la première et la deuxième région de bord (44, 46) de la zone (17) de garnissage et, préférablement, dans lequel une distance entre l'élément (36) de guidage de flux de gaz et une partie centrale de la zone (17) de garnissage est égale à ou plus petite qu'une distance entre l'élément (36) de guidage de flux de gaz et au moins une des première et deuxième régions de bord (44, 46).

3. Dispositif (10) selon l'une des revendications précédentes,
- dans lequel le système (20) d'irradiation comprend au moins deux unités (22) d'irradiation qui sont chacune affectées à une zone individuelle (30a, 30b) d'irradiation de la zone (17) de garnissage pour irradier sélectivement une partie de la couche de poudre de matière brute s'étendant dans ladite zone (30a, 30b) d'irradiation ; et
- dans lequel l'élément (36) de guidage de flux de gaz est situé entre lesdites zones (30a, 30b) d'irradiation ou dans lequel l'élément (36) de guidage de flux de gaz est situé proche d'une ou opposé à une région dans laquelle lesdites zones (30a, 30b) d'irradiation se chevauchent.

4. Dispositif (10) selon la revendication 3,
- dans lequel les zones (30a, 30b) d'irradiation sont agencées, avec un chevauchement partiel (34) facultatif, l'une derrière l'autre le long d'un axe (A) de flux de gaz s'étendant depuis la première région de bord (44) vers la deuxième région de bord (46).

5. Dispositif (10) selon la revendication 4,
- dans lequel le système (20) d'irradiation comprend au moins une autre unité (22) d'irradiation, affectée à une zone (30a, 30b) d'irradiation qui est définie de telle sorte que la pluralité de zones (30a, 30b) d'irradiation est agencée l'une derrière l'autre le long dudit axe (A) de flux de gaz, avec un chevauchement partiel facultatif entre zones (30a, 30b) d'irradiation adjacentes ; et
- dans lequel, pour chaque groupe de deux zones (30a, 30b) d'irradiation adjacentes, au moins un élément (36) de guidage de flux de gaz est prévu, qui est situé entre lesdites deux zones (30a, 30b) d'irradiation adjacentes ou dans lequel ledit élément (36) de guidage de flux de gaz est situé proche d'une ou opposé à une région dans laquelle lesdites deux zones (30a, 30b) d'irradiation adjacentes se chevauchent.

6. Dispositif (10) selon l'une quelconque des revendications précédentes,
dans lequel l'élément (36) de guidage de flux de gaz s'étend depuis une région opposée à la zone (17) de garnissage vers ladite zone (17) de garnissage et, facultativement, dans lequel une distance entre l'élément (36) de guidage de flux de gaz et la zone (17) de garnissage est inférieure à 10 cm.

7. Dispositif (10) selon l'une quelconque des revendications précédentes,
dans lequel l'élément (36) de guidage de flux de gaz est configuré pour s'étendre à l'extérieur d'un chemin de faisceau d'irradiation entre le système (20) d'irradiation et la zone (17) de garnissage.

8. Dispositif (10) selon l'une quelconque des revendications précédentes,
dans lequel l'élément (36) de guidage de flux de gaz est configuré pour recueillir des particules qui sont transportées par le flux de gaz détourné dans l'élément (36) de guidage de flux de gaz.

9. Dispositif (10) selon l'une quelconque des revendications précédentes,
dans lequel l'élément (36) de guidage de flux de gaz comprend au moins une ouverture et en particulier une partie (62) perforée ou poreuse, qui permet au moins un parmi ce qui suit :
- à au moins une partie du flux (48) de gaz de passer dans l'élément (36) de guidage de flux de gaz en des positions distantes d'une partie (50) de détournement de gaz proche de la zone (17) de garnissage, ladite partie (50) de détournement de gaz contenant une ouverture pour recevoir une partie du flux (48) de gaz pour la détourner à l'écart de la zone (17) de garnissage ; ou
- à au moins une partie du flux frais (54) de gaz de passer hors de l'élément (36) de guidage de flux de gaz en des positions distantes de la partie (56) d'amenée de gaz, ladite partie (56) d'amenée de gaz étant préférablement agencée proche de la zone (17) de garnissage.

10. Dispositif (10) selon l'une quelconque des revendications précédentes,
dans lequel l'élément (36) de guidage de flux de gaz et la zone (17) de garnissage sont mobiles l'un par rapport à l'autre selon au moins un de ce qui suit :
- l'élément (36) de guidage de flux de gaz étant mobile par rapport à la zone (17) de garnissage en parallèle à la zone (17) de garnissage ;
- l'élément (36) de guidage de flux de gaz étant mobile par rapport à la zone (17) de garnissage entre une position opposée à la zone (17) de garnissage et une position distante de la zone (17) de garnissage ;
- l'élément (36) de guidage de flux de gaz étant mobile par rapport à la zone (17) de garnissage le long d'un axe (Z) s'étendant à un angle par rapport à la zone (17) de garnissage ;
- la zone (17) de garnissage étant mobile par rapport à l'élément (36) de guidage de flux de gaz en parallèle à l'élément (36) de guidage de flux de gaz ;
- la zone (17) de garnissage étant mobile par rapport à l'élément (36) de guidage de flux de gaz entre une position opposée à l'élément (36) de guidage de flux de gaz et une position distante de l'élément (36) de guidage de flux de gaz ; et
- la zone (17) de garnissage étant mobile par rapport à l'élément (36) de guidage de flux de gaz le long d'un axe (Z) s'étendant à un angle par rapport à la zone (17) de garnissage.

11. Dispositif (10) selon la revendication 10,
dans lequel l'élément (36) de guidage de flux de gaz est mobile par rapport à la zone (17) de garnissage en fonction d'une opération du dispositif (14) d'application de poudre.

12. Dispositif (10) selon la revendication 10 ou 11,
dans lequel le dispositif (10) est configuré pour déplacer l'élément (36) de guidage de flux de gaz par rapport à la zone (17) de garnissage avant et/ou après que le dispositif (14) d'application de poudre a déployé une autre couche de poudre de matière brute sur la zone (17) de garnissage.

13. Dispositif (10) selon l'une quelconque des revendications précédentes,
dans lequel, pour déployer une autre couche de poudre de matière brute, le dispositif (14) d'application de poudre est mobile au travers de la zone (17) de garnissage ; et
dans lequel le dispositif (14) d'application de poudre comprend une section (60) de réception ou recevant au moins temporairement une partie de l'élément (36) de guidage de flux de gaz tout en se déplaçant au travers de la zone (17) de garnissage.

14. Procédé de production d'une pièce de travail tridimensionnelle en exécutant un processus de stratification additive au moyen d'un dispositif (10) selon l'une des revendications précédentes,
dans lequel le procédé comprend les étapes suivantes :
- déploiement d'une couche de poudre de matière brute sur une zone (17) de garnissage ;
- amenée d'au moins un flux (48) de gaz depuis une première région de bord (44) de la zone (17) de garnissage vers une deuxième région de bord (46) de la zone (17) de garnissage ;
- détournement d'au moins une partie du flux (48) de gaz à l'écart de la zone (17) de garnissage avant que ledit flux (48) de gaz n'atteigne la deuxième région de bord (46) ; et
- amenée d'un flux frais (54) de gaz le long de la zone (17) de garnissage, dans lequel ledit flux frais (54) de gaz est dirigé dans la même direction que le flux (48) de gaz avant qu'il ne soit partiellement détourné à l'écart de la zone (17) de garnissage,
dans lequel le détournement du flux (48) de gaz et l'amenée du flux frais (54) de gaz ont lieu dans des régions entre les première et deuxième régions de bord (44, 46).
